# EUROPÄISCHE PATENTANMELDUNG

(11) **EP 1 955 927 A1**
(43) Veröffentlichungstag der Anmeldung: **13.08.2008**
(21) Anmeldenummer: 08100839.3
(22) Anmeldetag: 23.01.2008
(51) Int. Cl.: B62D 5/04

(54) **Kontaktierung**

(30) Priorität: 12.02.2007 DE 102007006859
(71) Anmelder: Continental Automotive GmbH, 30165 Hannover (DE)
(72) Erfinder: Ehret, Juergen, 69469 Weinheim (DE); Lausser, Christof, 47803 Krefeld (DE); Scharf, Gerald, 65510 Idstein (DE)

(57) **Zusammenfassung**

Die vorliegende Erfindung befasst sich mit einer Kontaktierung der Leistungsstränge zwischen einem Steuergerät (20) und einem Elektromotor (12) bei motorisch unterstützten Lenksystemen von Fahrzeugen, wobei das Steuergerät (20) ein erstes Stanzgitter (30) aufweist und zweiteilige Steckverbinder vorgesehen sind, die erste (22) und zweite (24) Kontaktelemente aufweisen, die steckbar verbunden sind. Um eine möglichst einfache Kontaktierung zu erhalten, die sich für hohe Ströme eignet und zudem lösbar ist, wird vorgeschlagen, dass die ersten Kontaktelemente (22) unmittelbar aus dem ersten Stanzgitter (30) ausgeformt sind.

## Beschreibung

Die vorliegende Erfindung befasst sich mit einer Kontaktierung der Leistungsstränge zwischen einem Steuergerät und einem Elektromotor bei motorisch unterstützten Lenksystemen von Fahrzeugen, wobei das Steuergerät ein erstes Stanzgitter aufweist und zweiteilige Steckverbinder vorgesehen sind, die erste und zweite Kontaktelemente aufweisen, die steckbar verbunden sind.

Kontaktierungen der Leistungsstränge werden in motorisch unterstützten Servolenkungen, d. h. elektromechanischen oder elektrohydraulischen Lenksystemen von Fahrzeugen eingesetzt, um den Elektromotor der Servolenkung mit elektrischer Energie zu versorgen. Um den Motor an das Steuergerät anzuschließen, das die Stromzufuhr regelt, werden verschiedene Prinzipien eingesetzt, beispielsweise stoffschlüssiges Verbinden der Stränge, Verschrauben der Verbindungen oder die Verwendung von Steckverbindern. Das stoffschlüssige Verbinden, zum Beispiel durch Schweißen, hat den Nachteil, dass die Verbindung im Servicefall für einen Austausch des Servomotors oder des Steuergeräts nicht ohne Zerstörung gelöst werden kann. Das Verschrauben bedeutet zusätzliche Teile und einen hohen Aufwand bei der Montage. Für Steckverbinder werden zwar auch zusätzliche Teile benötigt, jedoch lassen sich Steckverbinder gegenüber Schrauben etwas einfacher montieren und die damit erreichten Verbindungen auch ohne großen Aufwand wieder lösen. Auf Grund der jüngsten Entwicklungen, die darauf abzielen, seitens der Servolenkung auch aktiv in die Lenkbewegungen einzugreifen, wenn sich das Fahrzeug in einer kritischen Situation befindet, sind leistungsfähigere Servomotoren erforderlich. Als Folge dessen steigen auch die Anforderungen an die elektrische Energieversorgung. Es hat sich gezeigt, dass sich herkömmliche Steckverbinder nicht für die auftretenden großen elektrischen Ströme eignen. Während die Zuleitungen mit dickeren Kabeln ausgebildet werden könnten, liegt ein Problem in den Kontaktflächen der Verbindungsstellen, die in Reihe angeordnet sind, da jede Übergangsstelle einen Kontaktwiderstand darstellt.

Die Aufgabe der vorliegenden Erfindung besteht daher darin, eine einfach zu montierende lösbare Kontaktierung für hohe Ströme zu schaffen.

Erfindungsgemäß wird die Aufgabe durch eine Kontaktierung der eingangs beschriebenen Art gelöst, bei der die ersten Kontaktelemente unmittelbar aus dem ersten Stanzgitter ausgeformt sind.

Der Vorteil der erfindungsgemäßen Kontaktierung besteht darin, dass die Zahl der Kontaktstellen und damit der potentiellen Schwachstellen der Kontaktierung reduziert ist, da pro Kontakt zumindest ein Übergang vom Steuergerät zu dem Steckverbinder entfällt. Dies führt bereits zu einer Erhöhung der Stromtragfähigkeit. Da die ersten Kontaktelemente bereits während des Herstellungsvorgangs des Stanzgitters angefertigt werden, lässt sich neben den Kosten auch die Anzahl der für den Zusammenbau notwendigen Teile reduzieren.

Bevorzugt ist eine Ausführungsform, bei welcher der Elektromotor ein zweites Stanzgitter aufweist und die zweiten Kontaktelemente aus dem zweiten Stanzgitter ausgeformt sind. Dadurch wird die Zahl der Übergangsstellen, beziehungsweise Kontaktstellen, auf ein Minimum reduziert.

Weiter bevorzugt ist eine Ausführungsform, bei welcher die ersten oder die zweiten Kontaktelemente Kontaktfedern und die jeweils anderen Kontaktelemente Kontaktlaschen sind, wobei die Kontaktfedern auf die Kontaktlaschen aufsteckbar sind, um das Steuergerät und den Motor möglichst einfach verbinden zu können. Das Einführen der Kontaktlasche in den Schlitz ergibt einen einfachen Bewegungsablauf für den Anschluss, der leicht automatisierbar ist.

Vorzugsweise sind ein oder mehrere Federelemente nebeneinander vorgesehen, die eine Kontaktfeder bilden und auf eine Kontaktlasche aufsteckbar sind. Die nebeneinander angeordneten Kontaktstellen wirken als parallel geschaltete Kontaktstellen. Bei dieser Parallelschaltung kommt es im Gegensatz zu einer seriellen Schaltung nicht zu einer Addition der Kontaktwiderstände. Durch die Anzahl der nebeneinander angeordneten Federelemente, bei denen es sich bevorzugt um gleiche Federelemente handelt, lässt sich die Zahl der Kontaktstellen einer Kontaktfeder variieren, so dass die Kontaktfeder an unterschiedlich hohe Ströme angepasst werden kann. Statt mehrerer gleicher Federelemente kann selbstverständlich auch nur Federelement aufgesteckt werden, wobei eine eventuell erforderliche Anpassung dann über die Dimension des einen Federelements erfolgt. Durch die Skalierbarkeit entfällt die sonst übliche Auslegung auf den größten Lastfall, die in der Regel dazu führt, dass der Kontakt in den meisten Fällen überdimensioniert, d. h. zu aufwendig und damit unwirtschaftlich ist. Die Skalierbarkeit erlaubt die Umsetzung des so genannten Baukastenprinzips, bei dem ein Grundtyp einer Komponente für mehrere Anwendungen beziehungsweise Lastfälle verwendet wird, beispielsweise für unterschiedliche Fahrzeugklassen.

Besonders bevorzugt ist eine Ausführungsform, bei der wenigstens eine Erweiterungsfeder vorgesehen ist, die auf eine Kontaktfeder aufschiebbar ist, wobei die Kontaktfeder mit der wenigstens einen Erweiterungsfeder auf eine Kontaktlasche aufsteckbar ist.

Die Erweiterungsfeder ist in der Breite und/oder Länge skalierbar und ergibt dadurch zusätzliche Kontaktstellen für den Stromfluss. Auch hier sind die zusätzlichen Kontaktstellen parallel zu den anderen Kontaktstellen geschaltet, um den Widerstand der Verbindung insgesamt zu reduzieren. In einer weiter bevorzugten Ausführungsform sind mehrere Erweiterungsfedern auf eine Kontaktfeder aufschiebbar, so dass die Kontaktierung sozusagen variabel aufgerüstet werden kann.

Vorzugsweise weisen die Kontaktfedern jeweils wenigstens eine federelastische Klemme mit wenigstens einem punkt- und/oder linienförmigen Kontaktbereich auf, der mit einem flächigen Kontaktbereich der Kontaktlasche zusammenwirkt. Dadurch ist gewährleistet, dass die elektrische Kontaktierung immer über die punkt- und/oder linienförmigen Kontaktbereiche erfolgt und es nicht zu undefinierten Kontaktstellen zwischen den beiden Kontaktpartnern kommt.

In einer zweckmäßigen Ausgestaltung der Erfindung weist die federelastische Klemme Kontaktzungen auf, die sich mit Schmalseiten gegenüberstehen und einen Schlitz zum Einführen der Kontaktlasche begrenzen, wobei wenigstens eine der Kontaktzungen federelastisch ist und der Schlitz durch die eingesteckte Kontaktlasche elastisch aufgeweitet ist. Die federelastischen Kontaktzungen gewährleisten einen dauerhaften Anpressdruck der Verklemmung und damit dauerhafte Kontakte.

Um eine besonders zuverlässige Kontaktierung zu erreichen, weisen beide Schlitzflanken wenigstens einer Klemme Vorsprünge auf, wobei die Vorsprünge der gegenüberliegenden Schlitzflanken versetzt zueinander angeordnet sind, so dass bei eingeführter Kontaktlasche mehrere definierte Kontaktstellen vorliegen.

Nachfolgend wird anhand der beigefügten Zeichnungen näher auf ein Ausführungsbeispiel der Erfindung eingegangen. Es zeigen:
- Fig. 1: einen Elektromotor eines motorisch unterstützten Lenksystems eines Fahrzeugs in Explosionsdarstellung;
- Fig. 2: den Motor nach Fig. 1 in zusammengesetztem Zustand und
- Fig. 3: die Kontaktierung der Leistungsstränge des Motors nach Fig. 1 in einem Ausschnitt.

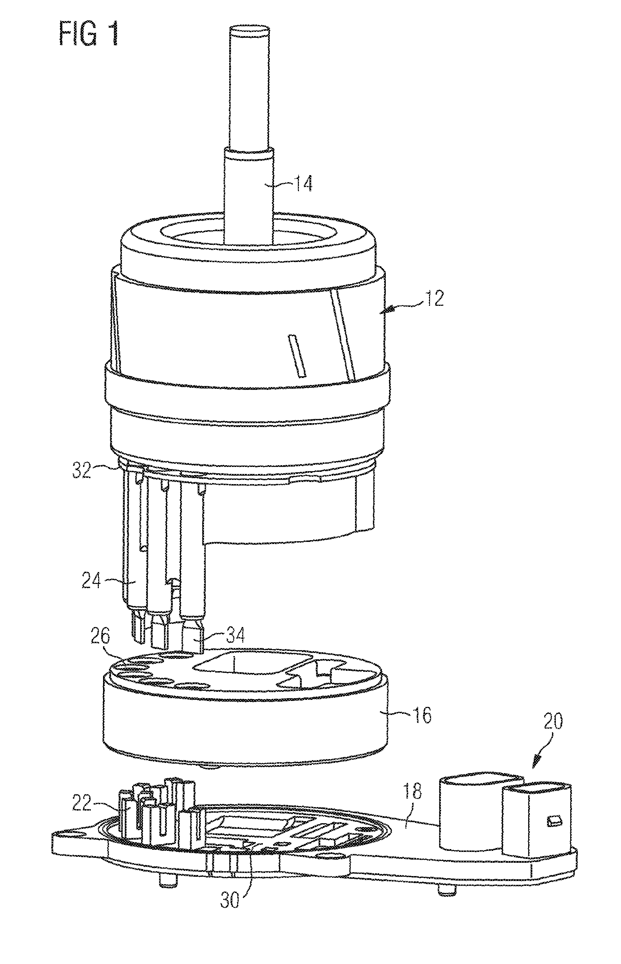

Fig. 1 zeigt einen Elektromotor 12 mit einer Abtriebsseite 14, ein Zwischenstück 16 und eine Grundplatte 18 eines Steuergeräts 20, die an dem Elektromotor 12 an der Stirnseite befestigbar ist, die der Abtriebsseite 14 gegenüberliegt. Zur Kontaktierung der Leistungsstränge zwischen dem Steuergerät 20 und dem Elektromotor 12 sind zweiteilige Steckverbinder vorgesehen, die erste Kontaktelemente 22 und zweite Kontaktelemente 24 aufweisen, die steckbar miteinander verbindbar sind. Zur Verbindung des Steuergeräts 20 mit dem Motor 12 wird das Zwischenstück 16 auf die Stirnseite des Motors 12 aufgeschoben, an der sich die zweiten Kontaktelemente 24 befinden. Das Zwischenstück 16 weist Ausnehmungen 26 auf, durch welche die zweiten Kontaktelemente 24 bei aufgesetztem Zwischenstück 16 hindurchragen. Die Grundplatte 18, auf der sich nicht gezeigte Bauelemente befinden, wird auf das Zwischenstück 16 aufgesetzt, wobei die ersten Kontaktelemente 22 und die zweiten Kontaktelemente 24 miteinander verbunden werden.

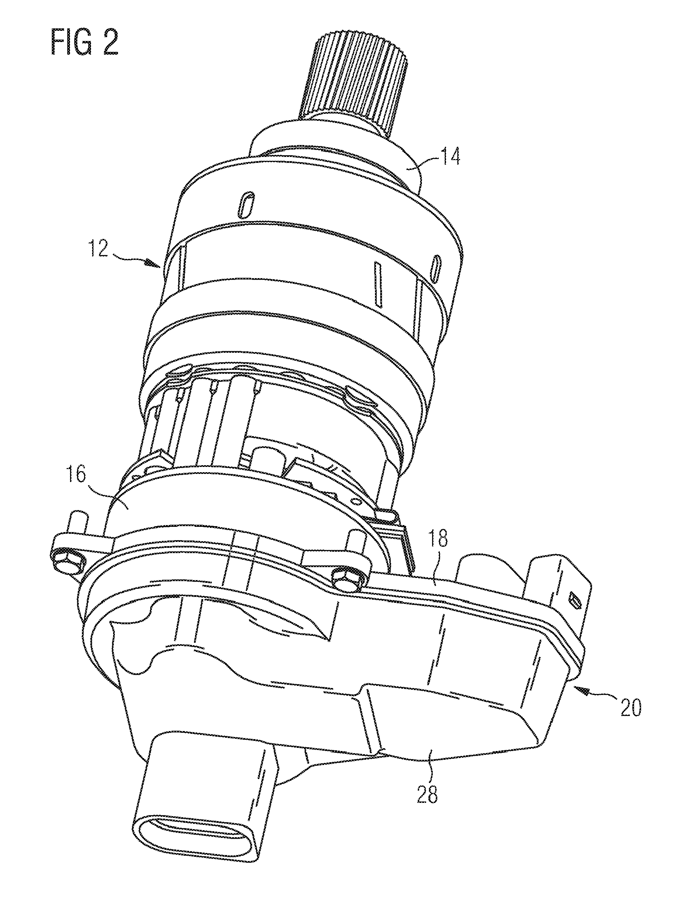

Der Elektromotor 12 ist in Fig. 2 mit aufgesetztem Zwischenstück 16 und montiertem Steuergerät 20 gezeigt, wobei dessen auf der Grundplatte 18 angeordneten Bauteile mit einer Gehäuseabdeckung 28 geschützt sind.

Die Grundplatte 18 des Steuergeräts 20 weist ein erstes Stanzgitter 30 auf, aus dem die ersten Kontaktelemente 22 unmittelbar ausgeformt sind. Durch das Ausformen der ersten Kontaktelemente 22 aus dem ersten Stanzgitter 30 können die Steckverbinder kostengünstig hergestellt werden, da diese bereits während des Stanzvorgangs ausgeformt werden. Außerdem reduziert sich die Anzahl der bei der Montage verwendeten Teile. Ein weiterer wesentlicher Vorteil ergibt sich dadurch, dass die Zahl an Kontaktstellen, d. h. Übergangsstellen, die in Reihe geschaltet angeordnet sind, auf ein Minimum reduziert ist. Da die Übergangsstellen in der Regel die Schwachstellen bei elektrischen Kontaktierungen darstellen, eignet sich die erfindungsgemäße Kontaktierung für hohe elektrische Ströme.

Der Elektromotor 12 weist ein zweites Stanzgitter 32 auf, aus dem die zweiten Kontaktelemente 24 ausgeformt sind. Die ersten Kontaktelemente 22 sind als Kontaktfedern und die zweiten Kontaktelemente 24 sind als Kontaktlaschen 34 ausgebildet. Zur Verbindung werden die Kontaktfedern auf die Kontaktlaschen 34 aufgesteckt.

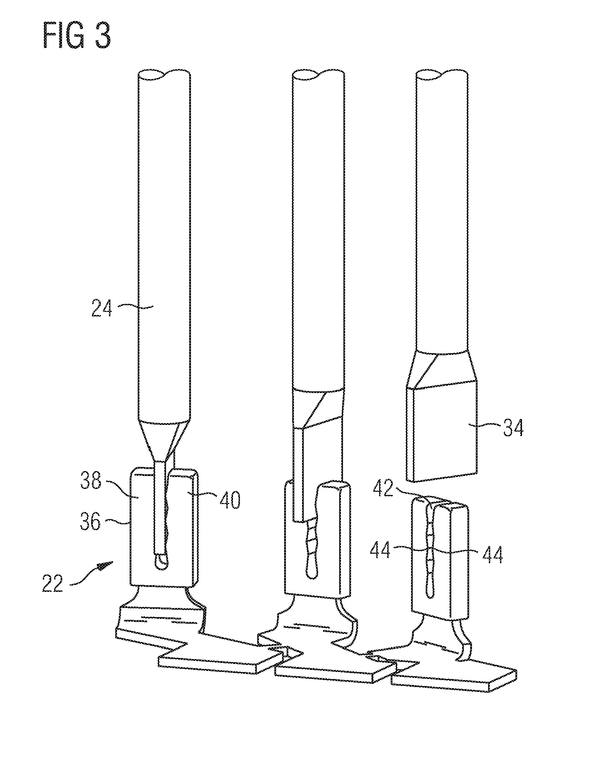

Die Verbindung der ersten Kontaktelemente 22 mit den zweiten Kontaktelementen 24 ist in Fig. 3 in einem größeren Maßstab als Ausschnitt gezeigt. Die als Kontaktfedern ausgebildeten ersten Kontaktelemente 22 werden durch mehrere gleiche Federelemente 36 gebildet, die nebeneinander vorgesehen sind. Diese Federelemente 36 bilden eine federelastische Klemme, welche die Kontaktlasche 34 des zweiten Kontaktelements 24 hält.

Die federelastische Klemme weist Kontaktzungen 38, 40 auf, die sich mit ihren Schmalseiten gegenüberstehen und einen Schlitz 42 zum Einführen der Kontaktlasche 34 begrenzen. Wenigstens eine der Kontaktzungen 38, 40 ist federelastisch, so dass der Schlitz 42 durch die eingesteckte Kontaktlasche 34 elastisch aufgeweitet wird. Dadurch ergibt sich ein sicherer Halt der Kontaktlasche 34 an der Kontaktfeder. Selbstverständlich kann die Verbindung auch so ausgebildet sein, dass die als eine Art Stecker wirkenden Kontaktlaschen der ersten Kontaktelemente 22 an dem Motor 12 vorgesehen sind und die als eine Art Buchse wirkenden Kontaktfedern der zweiten Kontaktelemente 24 an dem Steuergerät 20 vorgesehen sind. Die Kontaktzungen 38, 40 weisen an ihren Schlitzflanken Vorsprünge 44 auf, die jeweils einen punktuellen Kontaktbereich bilden. Die Vorsprünge 44 der gegenüberliegenden Schlitzflanken der Kontaktzungen 38, 40 sind versetzt zueinander angeordnet. Bezogen auf den Stromfluss sind die Kontaktstellen zwischen den ersten Kontaktelementen 22 und den zweiten Kontaktelementen 24 parallel geschaltet. Durch die Ausbildung mehrerer Vorsprünge 44 lassen sich mehrere definierte Kontaktstellen erreichen, über die hohe Ströme zuverlässig fließen können, ohne dass es zu einer zu starken Erwärmung oder gar Zerstörung beziehungsweise Beschädigung der Kontaktierung kommt. Die Kontaktierung eignet sich daher für leistungsstarke Elektromotoren 12 mit entsprechend hoher Leistungsaufnahme. In Fig. 3 ist das Einführen der Kontaktlasche 34 in die Kontaktfeder anhand dreier nebeneinander liegender Kontaktstellen gezeigt. Selbstverständlich befinden sich die nebeneinander liegenden Kontaktstellen in fertig montiertem Zustand alle in der eingeschobenen Stellung, wie sie in Fig. 3 an der linken Kontaktstelle gezeigt ist.

## Patentansprüche

1. Kontaktierung der Leistungsstränge zwischen einem Steuergerät (20) und einem Elektromotor (12) bei motorisch unterstützten Lenksystemen von Fahrzeugen, wobei das Steuergerät (20) ein erstes Stanzgitter (30) aufweist und zweiteilige Steckverbinder vorgesehen sind, die erste (22) und zweite Kontaktelemente (24) aufweisen, die steckbar verbunden sind,
**dadurch gekennzeichnet, dass** die ersten Kontaktelemente (22) unmittelbar aus dem ersten Stanzgitter (30) ausgeformt sind.

2. Kontaktierung nach Anspruch 1,
**dadurch gekennzeichnet, dass** der Elektromotor (12) ein zweites Stanzgitter (32) aufweist und die zweiten Kontaktelemente (24) aus dem zweiten Stanzgitter (32) ausgeformt sind.

3. Kontaktierung nach Anspruch 1 oder 2,
**dadurch gekennzeichnet, dass** die ersten (22) oder die zweiten Kontaktelemente (24) Kontaktfedern und die jeweils anderen Kontaktelemente Kontaktlaschen (32) sind, wobei die Kontaktfedern auf die Kontaktlaschen (32) aufsteckbar sind.

4. Kontaktierung nach Anspruch 3,
**dadurch gekennzeichnet, dass** ein oder mehrere Federelemente (36) nebeneinander vorgesehen sind, die eine Kontaktfeder bilden und auf eine Kontaktlasche (32) aufsteckbar sind.

5. Kontaktierung nach Anspruch 3 oder 4,
**dadurch gekennzeichnet, dass**
wenigstens eine Erweiterungsfeder vorgesehen ist, die auf eine Kontaktfeder aufschiebbar ist, wobei die Kontaktfeder mit der wenigstens einen Erweiterungsfeder auf eine Kontaktlasche aufsteckbar ist.

6. Kontaktierung nach Anspruch 5,
**dadurch gekennzeichnet, dass** mehrere Erweiterungsfedern auf eine Kontaktfeder aufschiebbar sind.

7. Kontaktierung nach einem der Ansprüche 3 bis 6,
**dadurch gekennzeichnet, dass** die Kontaktfedern jeweils wenigstens eine federelastische Klemme mit wenigstens einem punkt- und/oder linienförmigen Kontaktbereich aufweisen, der mit einem flächigen Kontaktbereich der Kontaktlasche zusammenwirkt.

8. Kontaktierung nach Anspruch 7,
**dadurch gekennzeichnet, dass** die federelastische Klemme Kontaktzungen (38, 40) aufweist, die sich mit Schmalseiten gegenüberstehen und einen Schlitz (42) zum Einführen der Kontaktlasche (32) begrenzen, wobei wenigstens eine der Kontaktzungen (38, 40) federelastisch ist und der Schlitz (42) durch die eingesteckte Kontaktlasche (32) elastisch aufgeweitet ist.

9. Kontaktierung nach Anspruch 8,
**dadurch gekennzeichnet, dass**
wenigstens eine Kontaktzunge (38, 40) an ihrer Schlitzflanke einen Vorsprung (44) aufweist, der einen runden oder spitzen, punktuellen Kontaktbereich bildet.

10. Kontaktierung nach Anspruch 9,
**dadurch gekennzeichnet, dass** beide Schlitzflanken wenigstens einer Klemme Vorsprünge (44) aufweisen, wobei die Vorsprünge (44) der gegenüberliegenden Schlitzflanken versetzt zueinander angeordnet sind.
